Europäisches Patentamt

European Patent Office

Office européen des brevets

(11) Numéro de publication: **0 437 456 B1**

(12) **FASCICULE DE BREVET EUROPEEN**

(45) Date de publication de fascicule du brevet: **22.12.93**  (51) Int. Cl.⁵: **C03C  14/00**, C04B 35/80,
                                                                    C04B 35/76, B22D 41/02

(21) Numéro de dépôt: **89910616.5**

(22) Date de dépôt: **28.09.89**

(86) Numéro de dépôt internationale :
**PCT/EP89/01137**

(87) Numéro de publication internationale :
**WO 90/03339 (05.04.90 90/08)**

㊃ RECIPIENT POUR METAUX EN FUSION, MATERIAU POUR CE RECIPIENT ET PROCEDE DE
FABRICATION DU MATERIAU.

(30) Priorité: **30.09.88 FR 8812833**

(43) Date de publication de la demande:
**24.07.91 Bulletin  91/30**

(45) Mention de la délivrance du brevet:
**22.12.93 Bulletin  93/51**

(84) Etats contractants désignés:
**BE DE GB IT**

(56) Documents cités:
**EP-A- 0 171 923**
**GB-A- 2 114 620**
**GB-A- 2 182 128**
**US-A- 4 764 488**

(73) Titulaire: **VESUVIUS FRANCE S.A.**
**68, rue de la Gare**
**F-59750 Feignies(FR)**

(72) Inventeur: **BRANDY, Gilbert**
**12 Immeuble Degand,**
**Rue du 19-Mars-1962**
**F-59750 Feignies(FR)**
Inventeur: **COMPAGNON, Jean, Claude**
**20 Rue des Lilas**
**F-59330 Hautmont(FR)**
Inventeur: **VIGNOT, Jean, Marie**
**Route d'Elesmes**
**F-59600 Mairieux(FR)**

(74) Mandataire: **Ilgart, Jean-Christophe**
**c/o Société de Protection des Inventions,**
**25, rue de Ponthieu**
**F-75008 Paris (FR)**

## EP 0 437 456 B1

**Description**

La présente invention a pour objet un nouveau matériau pour récipients de transfert de métal en fusion. Elle a plus particulièrement pour objet un matériau composite pour cet usage.

La plupart des récipients devant contenir des métaux en fusion sont réalisés en métaux plus réfractaires que le métal à contenir ; le métal constituant le matériau du récipient et le métal en fusion sont souvent séparés par des matériaux réfractaires, que ce soit par ce que l'on appelle dans le domaine du poteyage que ce soit d'une manière plus classique par du garnissage ou que ce soit par tout autre moyen.

Traditionnellement, ces outils sont réalisés en fonte ou en acier et sont obtenus soit par moulage, soit par emboutissage, puis préparés avant utilisation.

Dans cette conception traditionnelle, la nature du matériau constitutif induit une érosion électrochimique du récipient par le bain de métal en fusion, qui se traduit par une usure rapide de l'outil et une pollution par le fer du bain métallique.

La conductibilité thermique du matériau traditionnel induit une importante déperdition calorifique du prélèvement lors du transfert four-moule. L'opération de poteyage a pour but de remédier, en partie, a des inconvénients. Elle nécessite des arrêts de production des installations de moulage et impose un préchauffage de l'outil de prélèvement avant chaque reprise de production.

La recherche d'une minimisation des pertes calorifiques du prélèvement conduit le fondeur à placer, en position de repos, l'organe de prélèvement au plus près de la surface du bain, au détriment de la fiabilité mécanique du manipulateur de dosage et de transfert.

Lorsque les récipients ne sont pas soumis à des efforts importants, il est possible de réaliser des récipients en céramiques réfractaires pures. Toutefois ces céramiques réfractaires sont en général très fragiles et ne peuvent être utilisées que pour des récipients de faible et moyenne contenance.

Le problème est particulèrement aigu lorsqu'il s'agit de transporter du métal fondu, et ce notamment lorsque le récipient doit passer au-dessus d'ateliers ou en tout endroit où le bris du récipient entraînerait une chute de métal liquide qui risque d'être mortelle ou incapacitante pour les individus, destructrices pour les ateliers et les matériels, et cause d'incendies.

Dans ces conditions, il est impossible de prendre le moindre risque lors des opérations de transport de métal liquide. Ce transport est donc réalisé en général au moyen de récipients en métal poteyé ou non. En raison de l'excellente conductibilité thermique du métal, il convient de prévoir une surchauffe du métal liquide avant le transport, afin qu'il parvienne à sa destination toujours à l'état liquide et prêt à l'emploi.

De telles surchauffes ne sont pas toujours possibles. Par exemple, certains métaux sont volatils et une surchauffe risque d'entraîner un trop grand dégagement desdits métaux dans l'air. Il existe donc une température limite au-delà de laquelle il n'est pas possible de faire une surchauffe. Il existe d'autres raisons pour lesquelles une surchauffe n'est pas admissible ; citons notamment les températures au-delà desquelles l'oxydation devient trop importante ou au delà desquelles il n'est plus possible de garantir la qualité des métaux ou alliages coulés.

Ainsi, pour certains métaux et alliages, la différence de température entre la température supérieure limite et la température d'usage de l'alliage ou du métal liquide, est trop faible pour assurer un transport facile du métal en fusion. Il s'en suit que la température d'arrivée est souvent trop basse et de trop nombreuses pièces, notamment dans le cas du moulage, sont à mettre au rebus.

C'est pourquoi, un des buts de la présente invention est de fournir un matériau convenant pour les récipients devant contenir un métal liquide, qui soit à la fois suffisamment résistant pour ne pas être détruit au moindre choc, suffisamment peu conducteur pour éviter une trop grande déperdition calorifique et chimiquement inerte par rapport aux métaux transportés.

Un autre but de la présente invention est un procédé pour réaliser ce matériau ou pour réaliser des récipients en ce matériau.

Un autre but de la présente invention est de fournir des recipients en ce matériau.

Ces buts et d'autres qui apparaîtront par la suite sont atteints au moyen d'un matériau composite pour récipient de transfert de métal en fusion, caractérisé par le fait qu'il est constitué par une matière réfractaire et par une armature choisie dans le groupe constitué par les fils ou fibres, en réfractaires minéraux et les fils métalliques. La réalisation d'un tel matériau a nécessité de nombreuses recherches et la mise au point d'une technique de fabrication particulière. La matière réfractaire est constituée par les éléments suivants et leurs mélanges ; terres réfractaires, oxydes metalliques ou composés d'oxydes, borures métalliques, carbures métalliques, nitrures métalliques, néocéramiques, silice.

Avantageusement, les fils sont agencés, de préférence tissés, pour former un réseau lâche.

La taille des mailles, c'est-à-dire la distance entre deux fils appartenant soit à la trame, soit à la chaîne est entre environ 5 et environ 1000 fois le diamètre des fils utilisés.

2

La forme des mailles est indifférente et le maillage peut être potenu par tout moyen équivalent au tissage, par exemple, par simple entrecroisement de fils qui dans le cas du tissage au sens strict, constitueraient la chaîne.

Le réseau peut être simple ou multiple, il est avantageusement simple ou double. Le choix des fils est important et selon la présente invention, il existe une alternative pour obtenir un matériau qui puisse être fabriqué facilement et résister aux chocs thermiques et aux contraintes provoquées par des variations de température.

Un des termes de cette alternative est de choisir comme matériau constitutif des fils, un ou plusieurs matériaux réfractaires minéraux. Ils peuvent être constitués de fibres courtes ou longues dont le diamètre est compris entre environ 0,001 mm et environ 0,5 mm, de préférence entre 0,001 et environ 0,02 mm. Le diamètre des fils étant lui-même compris de préférence entre environ 1/20 mm et environ 5 mm.

Lorsque les fils sont en réfractaires minéraux, les valeurs données ci-dessus pour la taille des mailles se situent dans le haut de la gamme et dans ces cas là, une distance particulièrement satisfaisante entre deux fils opposée dans la maille est compris entre environ 2 et environ 20 mm.

Le matériau constitutif des fils peut être le carbone ou les sialons, mais selon un mode préféré de la présente invention, les fils sont réalisés en carbure de silicium comme le sont ceux qui sont vendus sous la marque déposée "Nicalon".

Selon l'autre terme de l'alternative, lesdits fils sont des fils métalliques. Le matériau constitutif des fils est choisi dans le groupe constitué par les métaux et alliages de préférence ferreux.

Ces derniers ont avantageusement un diamètre compris entre environ 0.1 et 1 mm, de préférence entre environ 0.3 et environ 0.6 mm, les fils pouvant le cas échéant être constitués de brins.

Lorsque l'on utilise des fils métalliques, on se situe dans le bas de gamme spécifiée ci-dessus et relative à la taille des mailles. Les mailles ont une dimension comprise de préférence entre environ 5 et 30 fois le diamètre du fil. Avantageusement, ladite matière réfractaire contient au moins 30 % en volume de silice vitreuse, de préférence au moins 50 %. Des éléments de charge et des liants sont ajoutés pour complétés à 100 %.

En ce qui concerne la charge, elle peut être choisie dans les différents adjuvants classiques : terres réfractaires, oxydes métalliques ou composés d'oxydes, borures métalliques, carbures métalliques, nitrures métalliques, néocéramiques, dérivés de silice. Parmi les oxydes métalliques, ce sont les oxydes réfractaires et ocmposés d'oxydes qui sont concernés et plus particulièrement les oxydes des métaux de transition et des éléments des colonnes 3 et 4a de la classification périodique des éléments.

Comme carbures, les carbures les plus appropriés sont les carbures de silicium, de titane, de tungstène ; comme nitrure, les nitrures de titane, de tungstène, de bore, de silicium, les sialons et les oxy-nitrures de silicium ; comme borures, les borures de titane ; comme néocéramiques, on peut citer celles qui sont obtenues par décomposition thermique des carbosilanes.

Un des avantages de la présente invention est de pouvoir moduler la conductibilité thermique en jouant sur l'importance et la composition de la charge. On peut ainsi faire varier la conductibilité thermique facilement entre une valeur d'un 1/2 W/m.° C à 10 W/m.° C. Sous réserve des conditions qui seront spécifiées ultérieurement pour le cas où l'on utilise des fils métalliques, les matériaux, les récipients et plus particulièrement les louches pour le transport de métal en fusion, peuvent être réalisés selon un procédé de fabrication comportant les étapes suivantes :

    a) Mise en forme par une technique choisie dans le groupe des techniques de moulage et de coulage,

    b) Optionnellement conditionnement de l'objet mis en forme,

    c) Cuisson jusqu'à frittage ; lesdits fils étant incorporés dans l'objet ou le matériau au cours de l'étape a) de mise en forme.

L'étape a) de mise en forme peut être réalisée de toute manière connue en elle-même, mais elle est avantageusement réalisée de la manière dont sont réalisés les matériaux, les éléments moulants objets d'une demande déposée le même jour.

Cette demande porte sur un procédé qui vise à réaliser des objets dont le rapport entre l'épaisseur maximum et l'épaisseur minimum de la pièce est supérieure à environ 1.5 et dans lequel, on utilise des techniques mettant en oeuvre un mélange contenant entre 2 et 20 % d'eau en poids. Ce mélange est composé d'une barbotine de silice vitreuse, de silice vitreuse en grains, de la charge d'adjuvants et du liant éventuel. Ladite barbotine contient en outre des agents à viscosité pour amener la viscosité du mélange à une valeur comprise entre o.1 Pa.5 et environ 50 Pa.s.

La technique de mise en forme conditionne la viscosité et la teneur en eau de ladite barbotine et dans une moindre mesure, la granulométrie de la silice vitreuse. La granulométrie et la viscosité doivent être choisies de manière que la vitesse de sédimentation d'une particule moyenne soit inférieure à 200, de préférence à 100 mm/h. Lorsque l'on utilise une technique de coulage, il convient de prévoir pour le moule un réservoir pour compenser le rétreint qui est en général de 10 %. Pour cette technique de coulage, on utilise de préférence une barbotine ayant de 16 à 20 % d'eau. Ce mélange est coulé dans un moule réalisé en plâtre à modeler selon des techniques connues en soi. Au cours du séchage dans le moule plâtre, le rétreint est compensé par la réserve de mélange.

Pour les autres techniques, à savoir le pressage, l'injection, le vibro-compactage ou le vibro-coulage, on utilise des mélanges ayant une viscosité élevée de l'ordre de 1 à 20 Pa.s. de préférence aux alentours de 10 Pa.s.

Dans ces cas également, on utilise les mélanges ayant un pourcentage d'eau bien inférieur puisqu'ils ne contiennent en général qu'entre 2 et 10 % d'eau en poids.

Une fois le mélange mis en forme, la cohésion de la pièce est obtenue par vieillissement naturel, par séchage, par polymérisation ou par cuisson. Ces moyens peuvent être utilisés séparément ou en combinaison.

Dans certains cas très difficiles, il peut être envisagé après obtention de la cohésion, de modifier la forme des pièces et en améliorer l'état de surface. La tolérance dimensionnelle dans ce cas est de l'ordre de 1/10e de millimètre. Il convient pour cela d'utiliser de préférence des outils diamantés avec, à titre d'exemple, des fraises de 2 à 10 millimètres de diamètre, tournant à des vitesses supérieures à 10 000 tours/mn, et ayant une vitesse d'avance de 2/10 à 1 millimètre/mn ; les quantités enlevées sont de l'ordre de 10 mm3/mn.

Dans le cas où l'on utilise des fils métalliques, un procédé particulier peut être mis en oeuvre pour résoudre les problèmes apparus au cours de la recherche qui a mené à la présente invention. Selon cette technique particulière, les fils métalliques sont, antérieurement à la mise en forme, recouverts d'une couche d'une substance kéromorphe, c'est-à-dire qui présente les propriétés physiques et morphologiques d'une cire. Outre la cire, on peut donner comme exemple de substances kéromorphes les paraffines, les esters et acides gras servant à faire les bougies et certains polymères ayant des caractéristiques suffisamment voisines de la cire pour pouvoir permettre le revêtement des fils métalliques. Cette opération est en général réalisée par trempage dans un bain de la substance kéromorphe à une température supérieure à son point de fusion ou de ramollissement. L'épaisseur de la couche de la substance kéromorphe est avantageusement comprise entre 2 % du diamètre du fil et 0,5 mm.

Cette substance kéromorphe risquant de nuire à la qualité du frittage ou du lien obtenu par chauffage à haute température, il convient de l'éliminer progressivement en permettant à ces produits de dégradation de s'échapper au travers des pores du matériau ou du récipient avant cuisson. Cette étape d'élimination consiste en un chauffage progressif à une température inférieure à 500°C et avantageusement à une température comprise entre environ 100°C jusqu'à environ 300°C pour obtenir une pyrolyse de la substance kéromorphe. Cette montée en température peut se faire par paliers ou progressivement et dure en général 1 à 3 heures.

La présente invention convient particulièrement bien aux procédés de moulage des métaux et alliages dont la température de prélèvement n'excède pas 1600°C.

Dans la présente description, les expressions "environ", "aux alentours de" et "de l'ordre de" soulignent que les valeurs chiffrées données correspondent à des arrondis mathématiques et que les zéros ne constituent pas des chiffres significatifs mais correspondent simplement à l'arithmétique de position.

Un exemple non limitatif suivant mettra à même l'homme de métier de mieux mettre en oeuvre la présente invention et d'en mieux comprendre l'intérêt.

Exemple :

Une "louche" de prélèvements a été réalisée selon la technique de la présente invention. L'armature métallique a été réalisée en fil d'acier inox de nuance 310, de diamètre 0,6 mm et de maille 12,5 en simple tressage soudé.

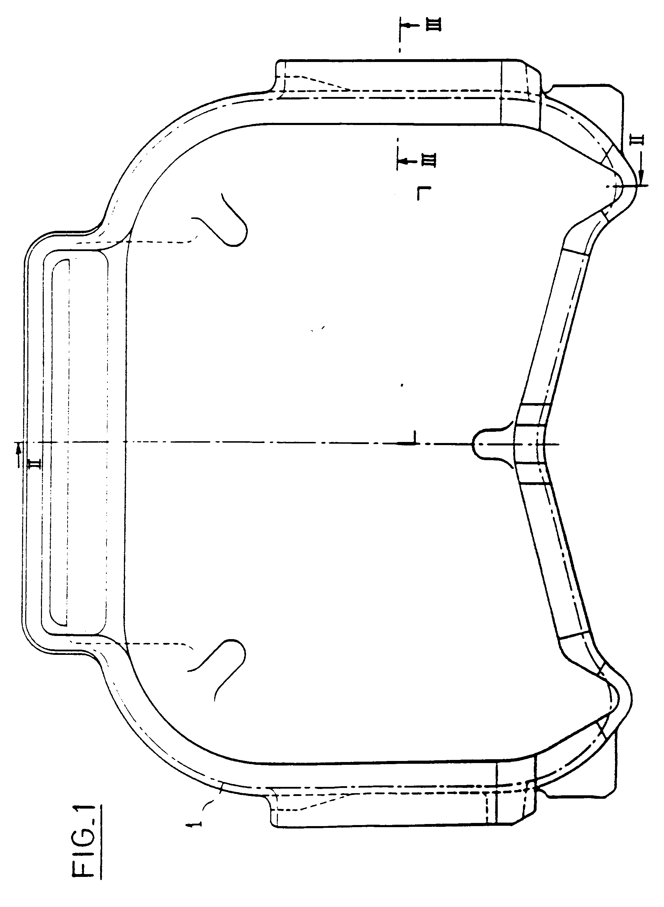

- la figure 1 représente en vue de dessus la louche,

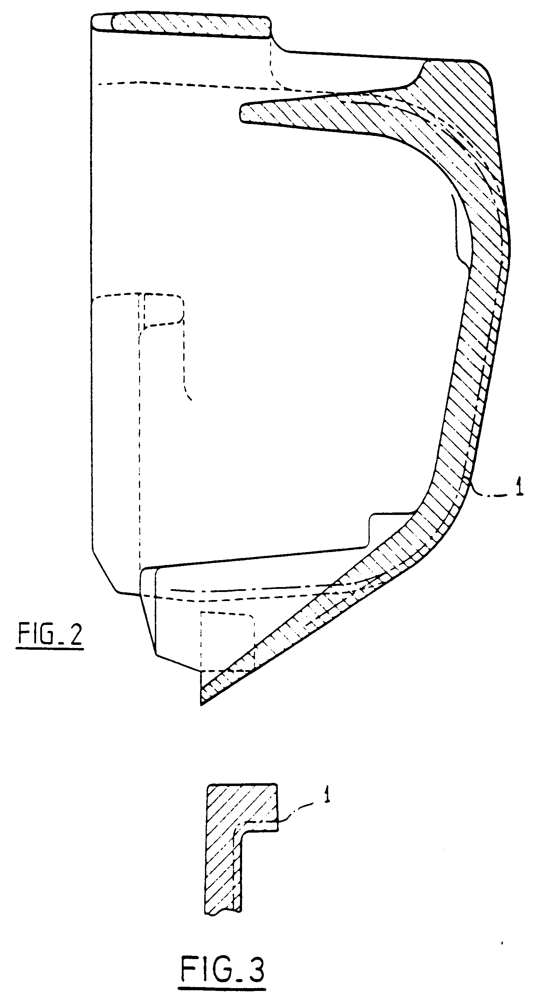

- la figure 2 est une coupe selon II-II,
- la figure 3 est une coupe partielle selon III-III.

Le réseau métallique noyé dans la silice vitreuse est désigné par la référence 1, la forme d'une telle louche est connue en elle-même et il est inutile d'alourdir la demande en détaillant sa description. La pièce a été réalisée en mettant le réseau métallique dans le moule puis en coulant un mélange à 18 % en eau dans ledit moule réalisé en plâtre à modeler.

Une fois la pièce sèche, elle a été soumise à un chauffage progressif à 150°C et est restée à cette température pendant 4 jours. La température de la pièce a alors été progressivement portée à 1000°C, la montée de température s'étalant sur 2 jours. Une fois la température de 1000°C atteinte, la pièce a été maintenue à cette température pendant une vingtaine d'heures. Le refroidissement a été mené lentement selon les procédures en usage (au moins environ 1 jour pour le refroidissement).

Le mélange coulé est constitué d'une barbotine composée de plus de 95 % de silice vitreuse de granulométrie $d_{80} < 1$ $\mu$m et d'une charge composée de plus de 80 % de silice vitreuse de granulométrie $< 300$ $\mu$m, d'alumine nodulaire. La silice vitreuse est la silice vendue sous la marque Glasrock dont les caractéristiques techniques sont rassemblées dans le tableau suivant :

| CARACTERISTIQUES GENERALES | |
|---|---|
| Analyse chimiques : $SiO_2$ | 99,5 % |
| Composition minéralogique | |
| Phases cristallines | 2 % |
| Propriétés physiques | |
| Densité | $1,9$ $Kg.dm^{-3}$ |
| Porosité ouverte | $12$ % |
| Coefficient de dilatation | $0,6$ $10^{-6}{}^{\circ}C^{-1}$ |
| Module de rupture pour flexion | $12$ $N.mm^{-2}$ |
| Conductivité thermique | |
| 260°C | $0,36$ $Kcal.h^{-1}.m^{-1}.{}^{\circ}C^{-1}$ |
| 540°C. | $0,51$ |
| 815°C | $0,64$ |
| 1090°C | $0,88$ |

**Revendications**

1. Récipient réfractaire pour la manutention d'un métal liquide en fusion, caractérisé en ce qu'il est constitué d'une matière réfractaire et d'une armature de fils de renforcement apte à éviter la rupture dudit récipient sous l'effet d'un choc et la perte du métal contenu dans le récipient.

2. Récipient selon la revendication 1, caractérisé par le fait que les fils sont agencés pour former un réseau lâche.

3. Récipient selon la revendication 2, caractérisé par le fait que le réseau formé par les fils est un réseau simple ou multiple, de préférence simple ou double.

4. Récipient selon les revendications 1 à 3 prises séparément, caractérisé par le fait que les fils sont réfractaires minéraux et par le fait que leur section correspond préférentiellement à un diamètre compris entre 0,1 et 1 mm.

5. Récipient selon la revendication 3, caractérisé par le fait que la distance entre deux fils est comprise entre 2 et 20 mm.

**6.** Récipient selon l'une des revendications 1 à 5 prises séparément, caractérisé par le fait que lesdits fils sont réalisés en carbure de silicium.

**7.** Récipient selon les revendications 1 à 3 prises séparément, caractérisé par le fait que lesdits fils sont des fils métalliques ayant un diamètre compris entre 0,1 et 1 mm, de préférence entre 0,3 et 0,6 mm.

**8.** Récipient selon la revendication 7, caractérisé par le fait que la distance entre les fils est égale à une valeur comprise entre environ 5 et entre environ 30 fois le diamètre du fil.

**9.** Récipient selon les revendications 1 à 8 prises séparément, caractérisé par le fait que ladite matière réfractaire est composée d'au moins 50 % de silice vitreuse.

**10.** Procédé de fabrication du récipient selon l'une des revendications 1 à 9 prises séparément, comportant les étapes suivantes :

a) mise en forme de la matière réfractaire par une technique choisie dans le groupe des techniques de coulage ou de moulage, de pressage, d'injection, de vibro-compactage ou de vibro-coulage,

b) étuvage de l'objet mis en forme,

c) et cuisson jusqu'à frittage, caractérisé par le fait que lesdits fils sont incorporés dans la matière réfractaire au cours de l'étape a) de mise en forme.

**11.** Procédé selon la revendication 10, caractérisé par le fait que les fils sont des fils métalliques, par le fait que lesdits fils métalliques sont enduits d'une couche de substance kéromorphe et par le fait que l'étape b) consiste en une étape de chauffage à une température comprise entre environ 100 °C et environ 300 °C afin d'éliminer avant l'étape c) la substance kéromorphe.

**12.** Procédé selon la revendication 11, caractérisé par le fait que l'épaisseur de la couche de substance kéromorphe est comprise entre 2 % du diamètre du fil et 0,5 mm.

**13.** Procédé selon la revendication 10, caractérisé par le fait que l'on utilise des mélanges ayant une viscosité élevée comprise entre 1 et 20 Pa.s, de préférence aux alentours de 10 Pa.s.

**Claims**

**1.** Refractory container for handling a molten liquid metal, characterized in that it is made of a refractory substance and of a reinforcement of strengthening filaments which is capable of preventing the rupture of the said container under the effect of an impact and the loss of the metal held in the container.

**2.** Container according to Claim 1, characterized in that the filaments are arranged to form a slack network.

**3.** Container according to Claim 2, characterized in that the network formed by the filaments is a single or multiple network, preferably single or double.

**4.** Container according to Claims 1 to 3 taken separately, characterized in that the filaments are inorganic refractories and in that their section preferably corresponds to a diameter of between 0.1 and 1 mm.

**5.** Container according to Claim 3, characterized in that the distance between two filaments is between 2 and 20 mm.

**6.** Container according to one of Claims 1 to 5 taken separately, characterized in that the said filaments are made of silicon carbide.

**7.** Container according to Claims 1 to 3 taken separately, characterized in that the said filaments are metal wires which have a diameter of between 0.1 and 1 mm, preferably between 0.3 and 0.6 mm.

**8.** Container according to Claim 7, characterized in that the distance between the filaments is equal to a value of between approximately 5 and between approximately 30 times the diameter of the filament.

EP 0 437 456 B1

**9.** Container according to Claims 1 to 8 taken separately, characterized in that the said refractory substance is made up of at least 50 % of vitreous silica.

**10.** Process for the manufacture of the container according to one of Claims 1 to 9 taken separately, comprising the following stages:
a) forming the refractory substance by a technique chosen from the group of the techniques of casting or moulding, of pressing, of injection, of vibro-compacting or of vibro-casting,
b) stoving of the formed object,
c) and firing as far as sintering, characterized in that the said filaments are incorporated into the refractory substance during the forming stage a).

**11.** Process according to Claim 10, characterized in that the filaments are metal wires, in that the said metal wires are coated with a layer of keromorphous substance and in that stage b) consists of a stage of heating to a temperature of between approximately 100°C and approximately 300°C in order to remove the keromorphous substance before stage c).

**12.** Process according to Claim 11, characterized in that the thickness of the layer of keromorphous substance is between 2 % of the diameter of the filament and 0.5 mm.

**13.** Process according to Claim 10, characterized in that mixtures which have a high viscosity of between 1 and 20 Pa s, preferably in the region of 10 Pa s, are employed.

**Patentansprüche**

**1.** Hitzebeständiges Gefäß für ein flüssiges Metall in der Schmelze, **dadurch gekennzeichnet, daß** es aus einem hitzebeständigen Material und einer Armierung aus Verstärkungsdraht besteht, die geeignet ist, den Bruch des Gefäßes unter der Wirkung eines Stoßes und den Verlust des in dem Gefäß enthaltenen Metalls zu verhindern.

**2.** Gefäß nach Anspruch 1, **dadurch gekennzeichnet, daß** die Drähte Werkstoffe zur Bildung eines losen Netzwerkes sind.

**3.** Gefäß nach Anspruch 2, **dadurch gekennzeichnet, daß** das durch die Drähte gebildete Netzwerk ein einfaches oder mehrfaches, vorzugsweise einfaches oder doppeltes Netzwerk ist.

**4.** Gefäß nach einem der Ansprüche 1 - 3, **dadurch gekennzeichnet, daß** die Drähte hitzebeständige Mineralien sind und ihr Querschnitt vorzugweise einen Durchmesser zwischen 0,1 und 1 mm besitzt.

**5.** Gefäß nach Anspruch 3, **dadurch gekennzeichnet, daß** der Drahtabstand zwischen 2 und 20 mm beträgt.

**6.** Gefäß nach einem der Ansprüche 1 - 5, **dadurch gekennzeichnet, daß** die Drähte aus Siliciumcarbid gefertigt werden.

**7.** Gefäß nach einem der Ansprüche 1 - 3, **dadurch gekennzeichnet, daß** die Drähte metallische Drähte mit einem Durchmesser zwischen 0,1 und 1 mm, vorzugsweise zwischen 0,3 und 0,6 mm sind.

**8.** Gefäß nach Anspruch 7, **dadurch gekennzeichnet, daß** der Drahtabstand einem Wert im Bereich etwa des 5-fachen bis 30-fachen Drahtdurchmessers entspricht.

**9.** Gefäß nach einem der Ansprüche 1 bis 8, **dadurch gekennzeichnet, daß** das hitzebeständige Material aus wenigstens 50 % Quarzglas besteht.

**10.** Verfahren zur Herstellung des Gefäßes nach einem der Ansprüche 1 bis 9, bestehend aus:
a) Formgebung des hitzebeständigen Materials mit einem Verfahren, ausgewählt aus Guß- oder Formverfahren, Preß-, Einspritz-, Schwingverdichtungs- oder Schwinggußverfahren,
b) Nachhärtung des geformten Gegenstandes,

7

c) und Sinterhärtung, **dadurch gekennzeichnet, daß** die Drähte in das hitzebeständige Material im Verlauf des Formgebungsschrittes (a) eingebaut werden.

11. Verfahren nach Anspruch 10, **dadurch gekennzeichnet, daß** die Drähte metallische Drähte sind, diese mit einer Schicht aus einer keromorphen Substanz überzogen sind und Schritt (b) aus einem Aufheizschritt auf eine Temperatur zwischen ungefähr 100° C und ungefähr 300° C zur Entfernung der keromorphen Substanz vor Schritt (c) besteht.

12. Verfahren nach Anspruch 11, **dadurch gekennzeichnet, daß** die Schichtdicke der keromorphen Substanz zwischen 2 % des Drahtdurchmessers und 0,5 mm liegt.

13. Verfahren nach Anspruch 10, **dadurch gekennzeichnet, daß** Mischungen mit einer erhöhten Viskosität zwischen 1 und 20 Pa x s vorzugsweise annähernd 10 Pa x s verwendet werden.

FIG_1

FIG.2

FIG.3